# EUROPÄISCHE PATENTSCHRIFT

(11) **EP 0 748 668 B1**
(45) Veröffentlichungstag und Bekanntmachung des Hinweises auf die Patenterteilung: **16.01.2002**
(21) Anmeldenummer: 96810268.1
(22) Anmeldetag: 26.04.1996
(51) Int. Cl.: B23P 15/32, E21B 10/44, B23P 15/28

(54) **Verfahren zur Herstellung von Drehbohrwerkzeugen**
Method for manufacturing rotary drill bits
Procédé pour la fabrication d'outils de forage rotatif

(30) Priorität: 17.06.1995 DE 19522033
(43) Veröffentlichungstag der Anmeldung: 18.12.1996
(73) Patentinhaber: HILTI Aktiengesellschaft, 9494 Schaan (LI)
(72) Erfinder: Söhnlein, Dieter, 86916 Kaufering (DE)
(74) Vertreter: Wildi, Roland

(56) Entgegenhaltungen:
- EP-A- 0 322 565
- DE-A- 2 735 227
- DE-A- 4 338 667
- US-A- 3 608 400

## Beschreibung

Die Erfindung betrifft ein Verfahren zur Herstellung von Drehbohrwerkzeugen zur Bearbeitung von spröd versagenden Untergründen, insbesondere von Gesteinsbohrwerkzeugen für Hammerbohrgeräte, gemäss dem gattungsbildenden Oberbegriff des Patentanspruches 1.

Für die Bearbeitung von spröd versagenden Untergründen, insbesondere von Gestein, Beton und Mauerwerk werden üblicherweise Drehbohrwerkzeuge eingesetzt, an deren Werkzeugspitze Schneiden aus harten Materialien angeordnet sind. Die Schneiden sind meist an Hartmetall-Elementen vorgesehen, die an der Stirnseite und/oder Kopfseite der Werkzeugspitze eingesetzt und dort verlötet oder auf andere Art befestigt werden. Diese bekannten Drehbohrwerkzeuge weisen eine Förderwendel auf, sie sich von den Schneiden bis kurz vor ein Einsteckende erstreckt. Die Gänge der Förderwendel bilden Fördernuten, die im Betrieb des Drehbohrwerkzeuges dem Abtransport von Bohrmehl dienen.

Die Herstellung der Förderwendel kann auf unterschiedliche Arten erfolgen, beispielsweise durch Verdrillen oder Schrägwalzen eines erwärmten stabartigen Werkzeugrohlings bzw. Halbzeugs oder durch spanabhebende Bearbeitung. Es wird auch versucht, die Förderwendel in einem Walzprozess herzustellen. Walzprozesse, wie beispielsweise Rollwalzen, Flachbackenwalzen oder Segmentbackenwalzen, sind aus der Gewindefertigung bekannt und zeichnen sich durch ihre Wirtschaftlichkeit aus. Bei im Walzprozess hergestellten Drehbohrwerkzeugen erstreckt sich die Förderwendel mit konstanter Steigung bis zur Werkzeugspitze, welche die Schneiden aufweisende Hartmetall-Elemente aufnehmen soll. Die Hartmetall-Elemente können ein Hartmetallplättchen sein, welches in einen Schlitz an der Werkzeugspitze eingesetzt wird, oder Hartmetall-Formteile, welche in Vertiefungen an der Werkzeugspitze befestigt werden.

Wegen der mit konstanter Steigung auslaufenden Fördernuten ist die Wandstärke im Bereich des Schlitzes bzw. der Vertiefungen für die Hartmetall-Elemente sehr unterschiedlich. Daraus ergibt sich für das Hartmetallplättchen bzw. für die Hartmetall-Formteile eine ungleichmässig starke Einfassung über den Durchmesser des Drehbohrwerkzeuges an der Werkzeugspitze. Die Stabilität der Einfassung des Hartmetallplättchens bzw. der Hartmetall-Formteile ist jedoch sehr wichtig für die Lebensdauer des Drehbohrwerkzeuges. Es ist daher nicht verwunderlich, dass derartige Drehbohrwerkzeuge mit im Walzprozess hergestellten Förderwendeln nur für den weniger anspruchsvollen Heimwerkerbereich angeboten werden. Bei Heimwerker-Anwendungen werden diese bekannten Drehbohrwerkzeuge in der Regel nur in Verbindung mit konventionellen Schlagbohrgeräten eingesetzt, bei denen die Werkzeugspitze nur Axialschläge relativ geringer Energie auf den Untergrund übertragen muss. Auch werden diese bekannten Drehbohrwerkzeuge in der Regel hauptsächlich für die Bearbeitung von leichtem Mauerwerk eingesetzt, weshalb sie meist auch unter der Bezeichnung "Mauerbohrer" angeboten werden.

In professionellen Anwendungen kommen üblicherweise Hammerbohrgeräte zum Einsatz, bei denen im Einsatz, beispielweise auf elektropneumatische Weise erzeugte, Axialschläge relativ hoher Energie auf das Drehbohrwerkzeug ausgeübt werden. Die Axialschläge werden über die Schneiden an der Werkzeugspitze in den Untergrund eingeleitet. Daraus ergibt sich eine hohe Beanspruchung der Einfassung für das die Schneiden tragenden Hartmetallplättchen bzw. der Hartmetall-Formteile, welche bei den bekannten Drehbohrwerkzeugen mit im Walzprozess hergestellter Wendel zu einem unakzeptabel schnellen Versagen des Drehbohrwerkzeuges führen kann.

Die DE4338667A offenbart ein Drehbohrwerkzeug, dessen Fördernuten sich nicht in den Bereich der Spitze erstrecken.

Es ist daher die Aufgabe der vorliegenden Erfindung, ein Verfahren für die Herstellung von Drehbohrwerkzeugen dahingehend zu verbessern, dass die danach hergestellten Drehbohrwerkzeuge für spröd versagende Untergründe auch im professionellen Einsatz eine akzeptable Lebensdauer aufweisen. Dabei soll die Wirtschaftlichkeit des Herstellungsverfahrens erhalten bleiben.

Die Lösung dieser Aufgabe besteht in einem Verfahren, welches die im kennzeichnenden Abschnitt des Patentanspruches 1 angeführten Verfahrensschritte aufweist.

Indem durch das erfindungsgemässe Verfahren die Förderwendeln derart hergestellt werden, dass der die Schneiden aufnehmende Kopfbereich des Drehbohrwerkzeuges von den Förderwendeln ausgespart wird, erhält der Kopfbereich des Drehbohrwerkzeuges eine Form, bei welcher die Wandstärke des an den Schlitz für das die Schneiden tragende Hartmetallplättchen bzw. an die Vertiefungen für die Hartmetall-Formteile angrenzenden Bereiches gleichmässig bleibt und nicht, wie bei den bekannten Drehbohrwerkzeugen, durch eine auslaufende Fördemut geschwächt wird. Dadurch ergibt sich eine sehr stabile Einfassung des Hartmetallplättchens bzw. der Hartmetall-Formteile. Durch die stabile Einfassung können das Hartmetallplättchen bzw. die Hartmetall-Formteile auch die von Hammerbohrgeräten erzeugten hohen Schlagenergien gut an den Untergrund übertragen, ohne sich frühzeitig aus der Einfassung zu lösen. Die Lebensdauer der erfindungsgemäss hergestellten Drehbohrwerkzeuge für Hammerbohrgeräte ist dadurch erhöht und erfüllt auch die Anforderungen professioneller Anwender.

In einer vorteilhaften Variante des erfindungsgemässen Verfahrens wird der förderwendelfreie Werkzeugkopf mit einem Durchmesser hergestellt, der im wesentlichen dem Durchmesser des Werkzeuges im Bereich der Förderwendeln entspricht. Dies kann einfach dadurch erreicht werden, dass für den Umformprozess zur Herstellung der Wendeln ein Werkzeugrohling bzw. ein Halbzeug herangezogen wird, welches einen Kopfbereich mit einem Durchmesser aufweist, der grösser ist als der Durchmesser des Bereiches des Werkzeugrohlings bzw. des Halbzeugs, in dem die Wendel hergestellt werden soll, und bereits den Hüllkreisdurchmesser der hergestellten Wendeln besitzt. Bei dem derartig ausgebildeten Kopfbereich des Drehbohrwerkzeuges ist das Hartmetallplättchen praktisch vollständig in den Kopfbereich eingebettet und weist gegenüber dem Umfang des Werkzeuges kaum einen Überstand auf.

In einer Variante des erfindungsgemässen Verfahrens wird der Durchmesser des Kopfbereiches bereichsweise verringert. Auf diese Weise wird der Werkzeugkopf verdichtet und wird die Einfassung des die Schneiden tragenden Hartmetallplättchens noch verbessert. Dadurch kann die Bohrleistung des Werkzeuges verbessert werden.

Die Verdichtung des Werkzeugkopfes kann beispielsweise dadurch erfolgen, dass er flachgeprägt wird, so dass er wenigstens zwei, einander gegenüberliegende, etwa parallel zueinander verlaufende Flächen aufweist. Dadurch wird der Bohrmehlabtransport aus dem Bohrloch verbessert, was der Bohrleistung zugute kommt.

In einer vorteilhaften Verfahrensvariante wird der Kopfbereich des Drehbohrwerkzeuges mit wenigstens zwei einander etwa gegenüberliegenden, axial an der Werkzeugspitze auslaufenden Nuten versehen, welche im wesentlichen kontinuierlich in Fördernuten münden, die zwischen den Gängen der Förderwendeln gebildet werden. Die axial auslaufenden Nuten beeinträchtigen die Einfassung des die Schneiden tragenden Hartmetallplättchens nur unwesentlich und verbessern den Bohrmehltransport bei der Anwendung.

Die Bearbeitung des Kopfbereiches des Drehbohrwerkzeuges kann beispielsweise in einem separaten Verfahrensschritt nach der Herstellung der Förderwendeln erfolgen. Es ist jedoch von Vorteil, wenn die Kopfumformung gleichzeitig mit der Herstellung der Förderwendeln erfolgt. Die Umformung erfolgt in derselben Vorrichtung und es ist keine neue Justierung erforderlich, so dass das Verfahren weiter vereinfacht wird.

Die Herstellung der Förderwendeln und gegebenenfalls die Bearbeitung des Werkzeugkopfes erfolgt mit Vorteil in einem Kalt- oder Halbwarmwalzvorgang. Dabei ist es nicht mehr erforderlich, den Werkzeugrohling bzw. das Halbzeug vor der Bearbeitung auf hohe Temperaturen aufzuwärmen. Auf diese Weise wird der Herstellvorgang verkürzt und der erforderliche Energiebedarf reduziert. Materialspannungen, Mass- und Gleichlaufungenauigkeiten infolge der Erwärmung und des Wiederabkühlens können vermieden werden.

Als Vorrichtungen für den Walzvorgang des Werkzeugrohlings bzw. des Halbzeugs werden bevorzugt ein oder mehrere Umformsegmente aufweisende Rollwalzen, Flächenbackenwalzen oder Segmentbackenwalzen verwendet. Die Prinzipien derartiger Vorrichtungen sind aus der Gewindeherstellung bekannt und erprobt. Insbesondere eignen sich diese bekannten Vorrichtungen für die Herstellung von grossen Stückzahlen und erlauben auch die Fertigung im Durchlaufverfahren.

Im folgenden werden das erfindungsgemässe Verfahren und vorteilhafte Verfahrensvarianten unter Bezugnahme auf die Zeichnungen näher erläutert. Es zeigen:
- Fig. 1: ein Beispiel eines nach dem erfindungsgemässen Verfahren hergestellten Drehbohrwerkzeuges;
- Fig. 2: einen Werkzeugrohling zur Durchführung des erfindungsgemässen Verfahrens;
- Fig. 3: ein in einem Walzwerkzeug geformtes Drehbohrwerkzeug gemäss Fig. 1;
- Fig. 4: einen Kopfbereich einer Variante eines Werkzeugrohlings;
- Fig. 5: den Kopfbereich eines aus einem Werkzeugrohling gemäss Fig. 4 in einem Walzwerkzeug geformten Drehbohrwerkzeuges;
- Fig. 6: ein nach einer Variante des erfindungsgemässen Verfahrens in einem Walzwerkzeug geformtes weiteres Beispiel eines Drehbohrwerkzeuges;
- Fig. 7: den Kopfbereich des Drehbohrwerkzeuges gemäss Fig. 6; und
- Fig. 8: den Kopfbereich eines nach einer weiteren Variante des erfindungsgemässen Verfahrens hergestellten Drehbohrwerkzeuges.

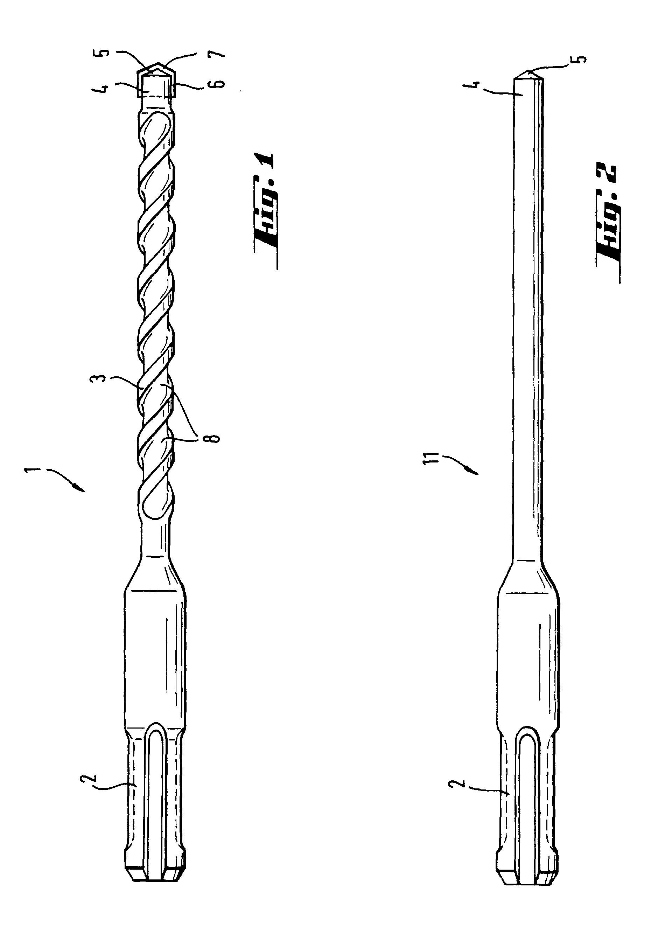

Ein Beispiel eines nach einer ersten Variante des erfindungsgemässen Verfahrens hergestellten Drehbohrwerkzeuges ist in Fig. 1 gesamthaft mit dem Bezugszeichen 1 versehen. Das Drehbohrwerkzeug umfasst ein Einsteckende 2 mit nicht näher bezeichneten Drehmitnahmenuten und axialen Sicherungsnuten, einen Förderwendeln 3 tragenden Bereich mit zwischen den Förderwendeln 3 verlaufenden Fördernuten 8 und einer Werkzeugspitze 5, die zur Aufnahme eines Schneiden 7 tragenden Hartmetallplättchens 6 ausgebildet ist. Üblicherweise wird dazu an der Werkzeugspitze 5 ein nicht näher bezeichneter Schlitz angebracht, in den das Hartmetallplättchen 6 eingelötet wird oder auf andere Art befestigt wird. Das nach dem erfindungsgemässen Verfahren hergestellte Drehbohrwerkzeug 1 weist einen Kopfbereich 4 auf, der das Hartmetallplättchen 6 einfasst und an die Förderwendeln 3 anschliesst. Anstelle eines Hartmetallplättchens können auch Hartmetall-Formteile in Vertiefungen an der Werkzeugspitze eingesetzt sein, welche die Schneiden tragen.

Der Kopfbereich 4 des Drehbohrwerkzeuges l besitzt eine axiale Längserstreckung 1, die wenigstens 10 % des maximalen Durchmessers d des Drehbohrwerkzeuges 1 im Bereich der Förderwendeln 3 entspricht und frei ist von Förderwendeln 3 bzw. von zwischen den Gängen der Förderwendeln 3 verlaufenden Fördernuten 8. Bei den üblicherweise eingesetzten Drehbohrwerkzeugen ist die Längserstreckung l des Kopfbereiches 4 nicht grösser als die Länge des die Förderwendeln 3 tragenden Bereiches. Bei dem dargestellten Ausführungsbeispiel des durch das erfindungsgemässe Verfahren hergestellten Drehbohrwerkzeuges 1 ist der maximale Durchmesser d im Bereich der Förderwendeln 3 grösser als der Durchmesser des Drehbohrwerkzeuges 1 im Kopfbereich 4. Dies ist eine Folge der Materialverdrängung bei der walzenden Herstellung der Förderwendeln 3.

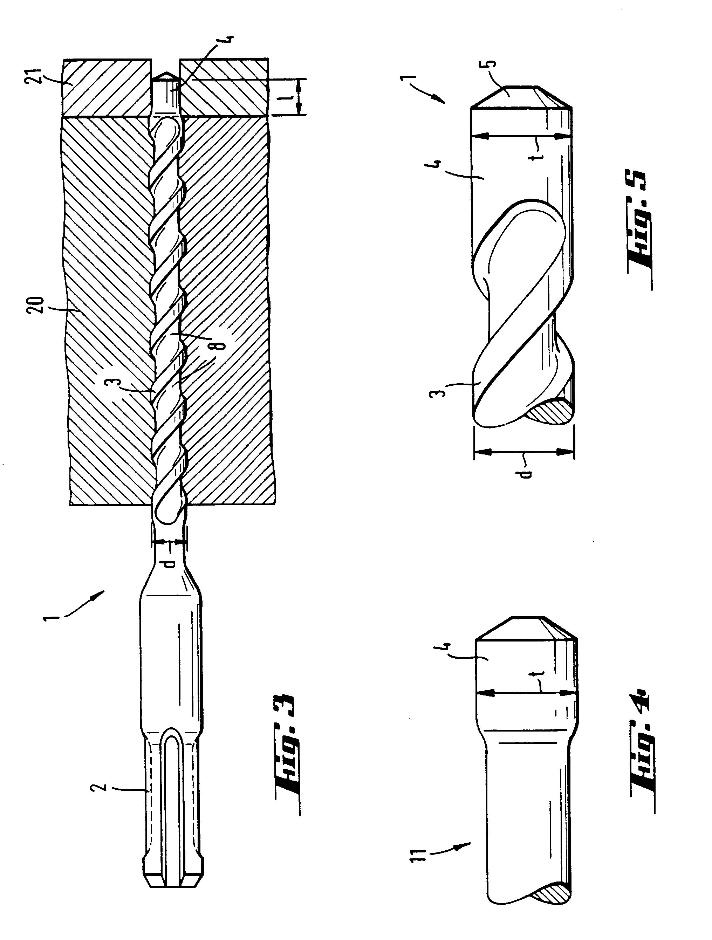

In Fig. 2 ist ein Werkzeugrohling 11 bzw. Halbzeug dargestellt, welches zur Herstellung des Drehbohrwerkzeuges 1 nach dem erfindungsgemässen Verfahren walzend weiterbearbeitet wird. Das Einsteckende 2 ist bereits ausgeformt und mit den nicht näher bezeichneten Drehmitnahme- und Sicherungsnuten versehen. Der Bereich des Werkzeugrohlings, in dem die Förderwendeln in einem Walzvorgang erstellt werden, weist über seine gesamte axiale Längserstreckung bis zur Werkzeugspitze 5 den Durchmesser auf, den der spätere Kopfbereich 4 des mit Förderwendeln versehenen Drehbohrwerkzeuges aufweisen wird.

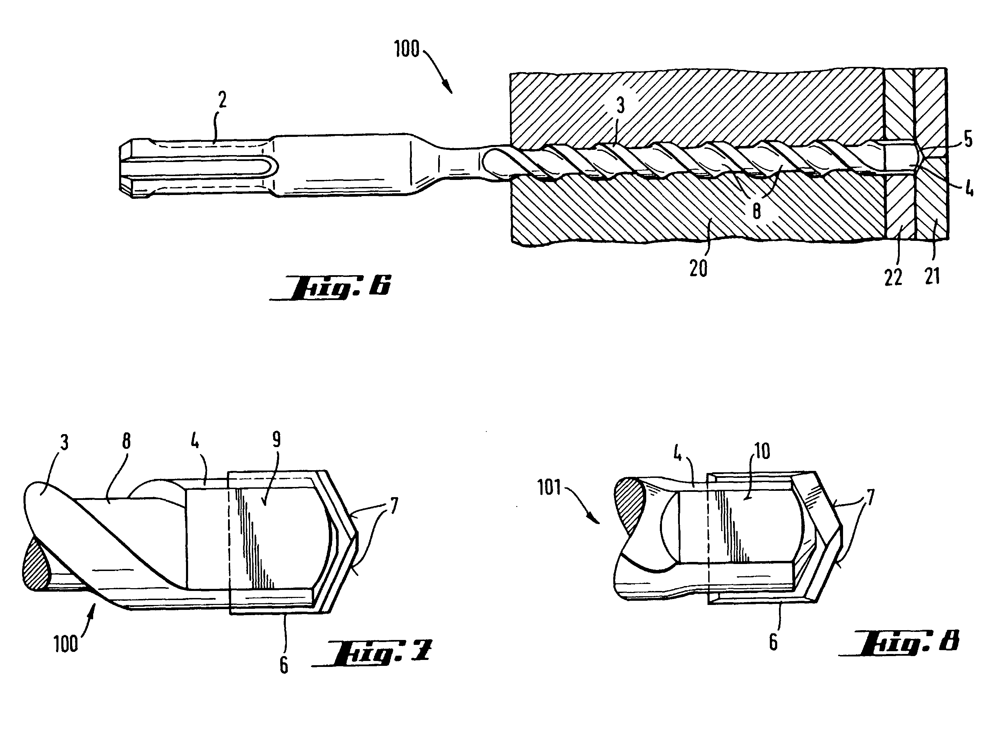

Fig. 3 zeigt ein aus einem Werkzeugrohling gemäss Fig. 2 in einem Walzwerkzeug hergestelltes Drehbohrwerkzeug 1. Das nur angedeutete Walzwerkzeug umfasst ein Wendelsegment 20 und eine Kopfanlaufscheibe 21. Mit Hilfe des Wendelsegmentes wird die gewünschte Förderwendelgeometrie mit gewünschter Anzahl Förderwendeln 3 und Steigung in den Werkzeugrohling eingeformt. Durch die bei der Umformung auftretende Materialverdrängung erhält das Drehbohrwerkzeug 1 im Bereich der Förderwendeln 3 seinen Durchmesser d. Die Kopfanlaufscheibe 21 umgreift den Kopfbereich 4 des Drehbohrwerkzeuges 1 über seine axiale Längserstreckung 1 und verhindert eine Durchmesserveränderung. Durch die spezielle Ausbildung der Kopfanlaufscheibe 21 ist gewährleistet, dass der Kopfbereich 4 von der Wendelformung ausgespart bleibt und seine Ausgangsform beibehält.

Fig. 4 zeigt einen Abschnitt eines Werkzeugrohlings, der einen gegenüber dem Bereich, in dem die Förderwendeln geformt werden, verdickten Kopfbereich 4 aufweist. Insbesondere ist der Durchmesser t des Kopfbereiches 4 des Werkzeugrohlings 11 derart gewählt, dass er nach der Herstellung der Förderwendeln dem maximalen Durchmesser d des Drehbohrwerkzeuges 1 im Bereich der Förderwendeln 3 entspricht, wie in Fig. 5 dargestellt. Dadurch weist das Drehbohrwerkzeug von dem die Förderwendeln 3 tragenden Bereich bis zur Werkzeugspitze 5 den gleichen Durchmesser auf. Es versteht sich, dass in diesem Fall in der Kopfanlaufscheibe des Walzwerkzeuges eine Öffnung ausgespart ist, deren Durchmesser dem erweiterten Durchmesser t des Kopfbereiches 4 des Werkzeugrohlings 11 entspricht. Durch geeignete Wahl des Durchmessers des Kopfbereiches 4 des Werkzeugrohlings kann sogar erreicht werden, dass der Kopfbereich des mit Wendeln versehenen Werkzeuges geringfügig grösser ist als der Durchmesser des Werkzeuges im Wendelbereich. Es versteht sich jedoch, dass der Kopfdurchmesser maximal dem Hüllkreisdurchmesser des die Schneiden tragendenden Hartmetallplättchens entsprechen kann.

Fig. 6 zeigt ein nach einer Variante des erfindungsgemässen Verfahrens in einem Walzprozess hergestelltes Drehbohrwerkzeug 100. Das Drehbohrwerkzeug 100 weist wiederum ein Einsteckende 2 mit nicht näher bezeichneten Drehmitnahme- und Sicherungsnuten auf. Die Förderwendeln 3 werden mit einem Wendelsegment 20 hergestellt, welches den Kopfbereich 4 des Drehbohrwerkzeuges 100 ausspart. Die Werkzeugspitze 5 liegt an einer Kopfanlaufscheibe 21 des Walzwerkzeuges an. Zwischen dem Wendelsegment 20 und der Kopfanlaufscheibe 21 ist ein Kopfsegment 22 angeordnet, welches der speziellen Formung des Kopfbereiches 4 dieses modifizierten Drehbohrwerkzeuges 100 dient.

Fig. 7 und 8 zeigen zwei Varianten des Kopfbereiches 4 des derart modifizierten Drehbohrwerkzeuges. Gemäss der Darstellung in Fig. 7 weist der Kopfbereich 4 wenigstens zwei einander gegenüberliegende axial zur Werkzeugspitze auslaufende Nuten 9 auf, von denen in der Darstellung nur eine Nut gezeigt ist. Die axial auslaufenden Nuten 9 werden mit Hilfe des Kopfsegments 22 des Walzwerkzeuges hergestellt. Dabei wird darauf geachtet, dass der Übergang von den zwischen den Förderwendeln 3 verlaufenden Fördernuten 8 zu den axial auslaufenden Nuten 9 weitgehend stetig verläuft. Aus den Darstellungen in Fig. 6 und 7 ist ersichtlich, dass der Kopfbereich 4 den gleichen Durchmesser aufweist, wie der die Förderwendeln tragende Bereich des Drehbohrwerkzeuges. Die Herstellung dieser Variante des Drehbohrwerkzeuges erfolgte daher aus einem Werkzeugrohling mit verdicktem Kopfbereich. In Fig. 7 ist auch das vom Kopfbereich 4 des Drehbohrwerkzeuges 100 gleichmässig eingefasste Hartmetallplättchen 6 mit Schneiden 7 dargestellt.

Die in Fig. 8 dargestellte Modifikation des Drehbohrwerkzeuges 101 weist einen Kopfbereich 4 auf, der gegenüber dem die Förderwendeln 3 tragenden Bereich einen geringeren Durchmesser aufweist. Soweit entspricht diese Variante des Drehbohrwerkzeuges dem Drehbohrwerkzeug 1 gemäss Fig. 1. Zum Unterschied davon ist der Kopfbereich 4 profiliert, beispielsweise flachgeprägt, und weist wenigstens zwei einander gegenüberliegende Flächen 10 auf, von denen in Fig. 8 eine Fläche 10 angedeutet ist. Durch das Einprägen der Flächen 10 wird der Durchmesser im Kopfbereich 4 geringfügig vergrössert und dem Durchmesser des die Förderwendeln tragenden Bereiches des Drehbohrwerkzeuges 101 angenähert. Die Herstellung dieser Variante des Kopfbereiches 4 kann in einer Walzvorrichtung gemäss Fig. 6 erfolgen, wobei das Kopfsegment gemäss der gewünschten Kopfform modifiziert ist. Die Flächen 10 können aber auch erst im Anschluss an die Herstellung der Förderwendeln im Walzprozess beispielsweise mit Hilfe von Prägestempeln hergestellt werden. Durch das Flachprägen des förderwendelfreien Kopfbereiches 4 des Drehbohrwerkzeuges 101 wird das die Schneiden 7 tragende Hartmetallplättchen 6 sehr gut eingefasst und weist dieses gegenüber dem Umfang des Drehbohrwerkzeuges einen nur geringen Überstand auf.

Bei den für die Varianten des erfindungsgemässen Verfahrens eingesetzten Walzvorrichtungen handelt es sich vorzugsweise um Walzvorrichtungen für Kalt- bzw. Halbwarmumformprozesse. Beispielsweise können für den Walzvorgang des Werkzeugrohlings bzw. des Halbzeugs ein oder mehrere Umformsegmente aufweisende Rollwalzen, Flächenbackenwalzen oder Segmentbackenwalzen verwendet werden.

Indem durch das erfindungsgemässe Verfahren die Förderwendel derart hergestellt wird, dass der die Schneiden aufnehmende Kopfbereich des Drehbohrwerkzeuges von der Förderwendel ausgespart wird, erhält der Kopfbereich des Drehbohrwerkzeuges eine Form, bei welcher die Wandstärke des an den Schlitz für das die Schneiden tragende Hartmetallplättchen bzw. an die Vertiefungen für die Hartmetall-Formteile angrenzenden Bereiches gleichmässig bleibt und nicht, wie bei den bekannten Drehbohrwerkzeugen, durch eine im gleichen Steigungswinkel auslaufende Fördemut geschwächt wird. Dadurch ergibt sich eine sehr stabile Einfassung des Hartmetallplättchens bzw. der Hartmetall-Formteile. Durch die stabile Einfassung kann das Hartmetallplättchen bzw. können die Hartmetall-Formteile auch die von Hammerbohrgeräten erzeugten hohen Schlagenergien gut an den Untergrund übertragen, ohne sich frühzeitig aus der Einfassung zu lösen. Die Lebensdauer der erfindungsgemäss hergestellten Drehbohrwerkzeuge für Hammerbohrgeräte ist dadurch erhöht und erfüllt auch die Anforderungen professioneller Anwender.

## Patentansprüche

1. Verfahren zur Herstellung von Drehbohrwerkzeugen (1,100 101) zur Bearbeitung von spröd versagenden Untergründen, insbesondere von Gesteinsbohrwerkzeugen für ein Hammerbohrgerät, bei dem ein Werkzeugrohling (11) oder ein Halbzeug in einem Umformprozess mit Förderwendeln (3) versehen wird, wobei die Förderwendeln (3) in einem Bereich des Werkzeugrohlings (11) bzw. des Halbzeuges hergestellt werden, der sich zwischen einem Einsteckende (2) und einem Kopfbereich (4) erstreckt, wobei der Kopfbereich (4) von der Erstellung der Förderwendeln (3) ausgespart wird und eine axiale Längserstreckung (1) aufweist, die wenigstens 10% des maximalen Durchmessers (d) des Werkzeuges im Bereich der Förderwendeln (3) entspricht, **dadurch gekennzeichnet, dass** die Herstellung der Förderwendeln (3) ausgehend von einem zylindrischen Werkzeugrohling (11) mit einem Kopfdurchmesser (t) erfolgt, welcher gleich oder grösser als der Durchmesser (d) im Bereich der Förderwendel (3) ist.

2. Verfahren nach Anspruch 1, **dadurch gekennzeichnet, dass** der förderwendelfreie Kopfbereich (4) des Drehbohrwerkzeuges (1, 100, 101) mit einem Durchmesser (t) hergestellt wird, der im wesentlichen dem Durchmesser (d) des Drehbohrwerkzeuges im Bereich der Förderwendeln (3) entspricht.

3. Verfahren nach Anspruch 1 oder 2, **dadurch gekennzeichnet, dass** der Durchmesser (t) des Kopfbereiches (4) bereichsweise verringert wird.

4. Verfahren nach Anspruch 3, **dadurch gekennzeichnet, dass** der Kopfbereich (4) derart profiliert wird, dass er wenigstens zwei, einander gegenüberliegende, etwa parallel zueinander verlaufende Flächen (10) aufweist.

5. Verfahren nach Anspruch 3 oder 4, **dadurch gekennzeichnet, dass** der Kopfbereich (4) des Drehbohrwerkzeuges (100) mit wenigstens zwei einander etwa gegenüberliegenden, axial an der Werkzeugspitze auslaufenden Nuten (9) versehen wird, welche im wesentlichen kontinuierlich in Fördernuten (8) münden, die zwischen den Gängen der Förderwendeln (3) gebildet werden.

6. Verfahren nach einem der Ansprüche 3 - 5, **dadurch gekennzeichnet, dass** die Bearbeitung des Kopfbereiches (4) des Drehbohrwerkzeuges (1, 100, 101) gleichzeitig mit der Herstellung der Förderwendeln (3) erfolgt.

7. Verfahren nach einem der vorangehenden Ansprüche, **dadurch gekennzeichnet, dass** die Herstellung der Förderwendeln (3) und gegebenenfalls die Bearbeitung des Kopfbereiches (4) in einem Kalt- bzw. Halbwarmwalzvorgang erfolgt.

8. Verfahren nach Anspruch 7, **dadurch gekennzeichnet, dass** für den Walzvorgang des Werkzeugrohlings (11) bzw. des Halbzeugs ein- oder mehere Umformsegmente (20, 21, 22) aufweisende Rollwalzen, Flächenbackenwalzen oder Segmentbackenwalzen verwendet werden.

## Claims

1. Method of manufacturing rotary drilling tools (1, 100, 101) for working on base materials which are susceptible to brittle failure, particularly rock drilling tools for a hammer drill, in which a tool blank (11) or a semi-finished product is provided with conveying helices (3) in a shaping process, the conveying helices (3) being produced in an area of the tool blank (11) or semi-finished product which extends between a shank (2) and a head region (4), the head region (4) being left free of conveying helices (3) and having an axial longitudinal extension (I) which corresponds to at least 10% of the maximum diameter (d) of the tool in the region of the conveying helices (3), **characterized in that** the conveying helices (3) are produced starting from a cylindrical tool blank (11) with a diameter (t) of the head which is the same as or larger than the diameter (d) in the region of the conveying helices (3).

2. Method according to Claim 1, **characterized in that** the head region (4) of the rotary drilling tool (1, 100, 101), being free of conveying helices, is made with a diameter (t) which largely corresponds to the diameter (d) of the rotary drilling tool in the region of the conveying helices (3).

3. Method according to Claim 1 or 2, **characterized in that** the diameter (t) of the head region (4) is reduced in some areas.

4. Method according to Claim 3, **characterized in that** the head region (4) is profiled in such a way that it has at least two surfaces (10) which are located opposite one another and extend approximately parallel in relation to one another.

5. Method according to Claim 3 or 4, **characterized in that** the head region (4) of the rotary drilling tool (100) is provided with at least two grooves (9) which are located approximately opposite one another and extend axially so as to terminate at the tool tip, said grooves (9) to a large extent opening continuously into conveying grooves (8) which are formed between the turns of the conveying helices (3).

6. Method according to one of Claims 3 - 5, **characterized in that** the head region (4) of the rotary drilling tool (1, 100, 101) and the conveying helices (3) are formed at the same time.

7. Method according to one of the preceding claims, **characterized in that** the conveying helices (3) and possibly the head region (4) are formed in a cold or warm rolling process.

8. Method according to Claim 7, **characterized in that** cylinder rollers, surface jaw rollers or segmental jaw rollers, having one or more shaping segments (20, 21, 22), are used for the process of rolling the tool blank (11) or semi-finished product.

## Revendications

1. Procédé de fabrication d'outils de forage rotatif (1, 100, 101) pour travailler des supports sensibles à la rupture fragile, en particulier d'outils de forage de roche pour un marteau perforateur, dans lequel une ébauche d'outil (11) ou un demi-produit est pourvu, dans un processus de formage, d'hélices d'évacuation (3), les hélices d'évacuation (3) étant réalisées dans une zone de l'ébauche d'outil (11) ou, respectivement, du demi-produit qui s'étend entre une extrémité insérable (2) et une zone de tête (4), la zone de tête (4) étant épargnée par la formation des hélices d'évacuation (3) et présentant une extension longitudinale axiale (1) qui correspond au moins à 10 % du diamètre maximal (d) de l'outil dans la zone des hélices d'évacuation (3), **caractérisé en ce que** la réalisation des hélices d'évacuation (3) s'effectue à partir d'une ébauche cylindrique d'outil (11) avec un diamètre de tête (t) qui est égal ou supérieur au diamètre (d) dans la zone de l'hélice d'évacuation (3).

2. Procédé selon la revendication 1, **caractérisé en ce que** la zone de tête (4) dépourvue d'hélice d'évacuation de l'outil de forage rotatif (1, 100, 101) est réalisée avec un diamètre (t) qui correspond sensiblement au diamètre (d) de l'outil de forage rotatif dans la zone des hélices d'évacuation (3).

3. Procédé selon la revendication 1 ou 2, **caractérisé en ce que** le diamètre (t) de la zone de tête (4) est réduit par endroits.

4. Procédé selon la revendication 3, **caractérisé en ce que** la zone de tête (4) est profilée de façon à comporter au moins deux surfaces (10) qui sont situées à l'opposé l'une de l'autre et s'étendent sensiblement parallèlement l'une à l'autre.

5. Procédé selon la revendication 3 ou 4, **caractérisé en ce que** la zone de tête (4) de l'outil de forage rotatif (100) est pourvue d'au moins deux rainures (9) qui sont situées sensiblement à l'opposé l'une de l'autre et se terminent axialement au niveau de la pointe de l'outil et qui débouchent de manière sensiblement continue dans des rainures d'évacuation (8) qui sont formées entre les pas des hélices d'évacuation (3).

6. Procédé selon l'une des revendications 3 à 5, **caractérisé en ce que** le façonnage de la zone de tête (4) de l'outil de forage rotatif (1, 100, 101) s'effectue simultanément avec la réalisation des hélices d'évacuation (3).

7. Procédé selon une des revendications précédentes, **caractérisé en ce que** la réalisation des hélices d'évacuation (3) et, le cas échéant, le façonnage de la zone de tête (4) s'effectuent par laminage à froid ou à température modérée.

8. Procédé selon la revendication 7, **caractérisé en ce que**, pour le laminage de l'ébauche d'outil (11) ou, respectivement, du demi-produit, on emploie des cylindres en forme de rouleaux, des cylindres à mâchoires continues ou des cylindres à mâchoires segmentées comportant un ou plusieurs segments de formage (20, 21, 22).
